# EUROPÄISCHE PATENTSCHRIFT

(11) **EP 2 837 092 B1**
(45) Veröffentlichungstag und Bekanntmachung des Hinweises auf die Patenterteilung: **03.10.2018**
(21) Anmeldenummer: 13727504.6
(22) Anmeldetag: 15.04.2013
(51) Int. Cl.: H02P 21/14, H05B 41/28, H02M 1/42, H05B 37/02

(54) **VERFAHREN ZUM REGELN EINER LEISTUNGSFAKTORKORREKTURSCHALTUNG, LEISTUNGSFAKTORKORREKTURSCHALTUNG UND BETRIEBSGERÄT FÜR EIN LEUCHTMITTEL**
METHOD FOR CONTROLLING A POWER FACTOR CORRECTION CIRCUIT, POWER FACTOR CORRECTION CIRCUIT AND OPERATING DEVICE FOR A LAMP
PROCÉDÉ POUR AJUSTER UN CIRCUIT DE CORRECTION DE FACTEUR DE PUISSANCE, CIRCUIT DE CORRECTION DE FACTEUR DE PUISSANCE ET APPAREIL DE FONCTIONNEMENT POUR UN MOYEN D'ÉCLAIRAGE

(30) Priorität: 13.04.2012 DE 102012007448; 03.09.2012 DE 102012017397
(43) Veröffentlichungstag der Anmeldung: 18.02.2015
(73) Patentinhaber: Tridonic GmbH & Co. KG, 6851 Dornbirn (AT)
(72) Erfinder: MITTERBACHER, Andre, 6850 Dornbirn (AT); AUER, Hans, 6850 Dornbirn (AT)
(74) Vertreter: Banzer, Hans-Jörg
(86) Internationale Anmeldenummer: PCT/AT2013/000072
(87) Internationale Veröffentlichungsnummer: WO 2013/152374

(56) Entgegenhaltungen:
- EP-A1- 2 315 497
- DE-A1-102005 018 775
- DE-A1-102008 057 333

## Beschreibung

Die Erfindung betrifft ein Verfahren und eine Schaltung zur Leistungsfaktorkorrektur. Insbesondere betrifft die Erfindung das technische Gebiet der Leistungsfaktorkorrektur für den Einsatz bei Betriebsgeräten oder elektronischen Vorschaltgeräten für Leuchtmittel.

Eine Leistungsfaktorkorrektur ("Power Factor Correction", PFC) wird eingesetzt, um Oberwellenströme in einem Eingangsstrom zu beseitigen bzw. zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrekturschaltung entgegengewirkt werden.

Leistungsfaktorkorrekturschaltungen werden auch bei Betriebsgeräten für Leuchtmittel, beispielsweise bei elektronischen Vorschaltgeräten für Fluoreszenzleuchtmittel oder bei LED-Konvertern, eingesetzt. Die Verwendung derartiger Schaltungen bei Geräten zum Betreiben von Leuchtmitteln ist sinnvoll, da Normen die zulässige Rücksendung von Oberwellen in das Versorgungsnetz beschränken.

Für Leistungsfaktorkorrekturschaltungen wird häufig eine Schaltungstopologie verwendet, die auf einem auch als Hochsetzsteller oder Aufwärtswandler bezeichneten Boost-Konverter beruht. Dabei wird eine mit einer gleichgerichteten Wechselspannung versorgte Induktivität oder Spule durch Einschalten/Ausschalten eines steuerbaren Schalters mit einem Eingangsstrom geladen bzw. entladen. Der Entladestrom der Induktivität fließt über eine Diode zu dem mit einer Ausgangskapazität gekoppelten Ausgang des Konverters, so dass am Ausgang eine gegenüber der Eingangsspannung erhöhte Gleichspannung abgegriffen werden kann. Andere Konverterarten sind ebenfalls verwendet verfügbar.

Leistungsfaktorkorrekturschaltungen, deren Regelverhalten durch externe Befehle einstellbar ist, können bei Betriebsgeräten für Leuchtmittel verwendet werden. Dabei können beispielsweise Eigenschaften eines Reglers abhängig von externen Befehlen eingestellt werden.

Regler von Leistungsfaktorkorrekturschaltungen können so ausgestaltet werden, dass das Regelverhalten abhängig vom jeweiligen Betriebszustand des Betriebsgeräts, in dem die Leistungsfaktorkorrekturschaltung verwendet wird, unterschiedlich sein kann. So kann beispielweise ein erstes Regelverhalten für einen ersten Betriebszustand und ein zweites Regelverhalten für einen zweiten Betriebszustand resultieren. Beispielsweise kann bei einem elektronischen Vorschaltgerät für eine Gasentladungslampe das Regelverhalten abhängig davon gewählt werden, ob beispielsweise eine Vorheizphase oder eine Zündphase vorliegt.

Während Regler von Leistungsfaktorkorrekturschaltungen meist so ausgelegt werden können, dass sie eine zuverlässige Regelung einer Regelgröße auf einen Sollbereich erzielen, können bestimmte Betriebszustände herkömmliche Regler für Leistungsfaktorkorrekturschaltungen vor Herausforderungen stellen. Ein Beispiel ist die abrupte Änderung einer Last, die von dem Betriebsgerät versorgt wird. Eine derartige Änderung kann auftreten bei Austausch des Leuchtmittels und/oder Ausfall, oder abdimmen. Beispielsweise kann sich die Last an einem LED-Konverter ändern, wenn eines von mehreren LEDs oder eine LED-Strecke ausfällt. In derartigen Fällen besteht das Risiko, dass herkömmliche Regler die Ausgangsspannung der Leistungsfaktorkorrekturschaltungen oder eine andere Regelgröße häufig nicht mehr ausregeln können, wenn sich beispielsweise die Last abrupt ändert. Es besteht dann das Risiko, dass aus Sicherheitsgründen eine Fehlerabschaltung vorgenommen werden muss.

Die DE 10 2008 057 333 A1, die als Basis für den Oberbegriff der unabhängigen Patentansprüche dient, offenbart eine adaptive Leistungsfaktorkorrektur(PFC)-Schaltung. Eine Steuerschaltung stellt kontinuierlich oder stufenweise eine Betriebsweise der PFC-Schaltung abhängig von einem Messsignal ein.

Die EP 2 315 497 A1 offenbart eine Leistungsfaktorkorrekturschaltung, bei der ein oder mehrere Parameter der Leistungsfaktorkorrekturschaltung abhängig von einem Steuersignal geändert werden, um die Ausgangsspannung der Leistungsfaktorkorrekturschaltung einzustellen.

Die DE 10 2005 018 775 A1 offenbart eine parametrisierte digitale Leistungsfaktorkorrekturschaltung.

Aufgabe ist, Verfahren und Vorrichtungen anzugeben, die Verbesserungen im Hinblick auf die genannten Probleme bieten. Aufgabe ist, Verfahren und Vorrichtungen zur Regelung einer Leistungsfaktorkorrekturschaltung anzugeben, die besser auf sich rasch ändernde Bedingungen, beispielsweise eine sich rasch ändernde Last, reagieren können.

Nach Ausführungsbeispielen der Erfindung werden ein Verfahren, eine Leistungsfaktorkorrekturschaltung und ein Betriebsgerät für ein Leuchtmittel mit den in den unabhängigen Ansprüchen angegebenen Merkmalen angegeben. Die abhängigen Ansprüche definieren vorteilhafte und bevorzugte Ausführungsformen der Erfindung.

Bei Verfahren und Vorrichtungen nach Ausführungsbeispielen wird ein Regelverhalten einer Leistungsfaktorkorrekturschaltung abhängig von einer Messgröße, die in der Leistungsfaktorkorrekturschaltung erfasst wird, angepasst. Die Messgröße kann gleich der Regelgröße sein. Die Messgröße kann der Ausgangsspannung der Leistungsfaktorkorrekturschaltung entsprechen. Eine Anpassung des Regelverhaltens kann selektiv abhängig von der Messgröße und insbesondere abhängig von einem Schwellenwertvergleich der Messgröße erfolgen.

Die Anpassung des Regelverhaltens kann so erfolgen, dass zwischen einem langsameren und einem schnelleren Regelverhalten gewechselt werden kann. So lange die Messgröße sich in einem Bereich befindet, in dem das Risiko einer Fehlerabschaltung gering ist, kann ein langsameres Regelverhalten verwendet werden. Es kann ein erster Schwellenwert definiert werden, mit dem die Messgröße verglichen werden kann, um zu bestimmen, ob sich die Leistungsfaktorkorrekturschaltung einem Betriebzustand nähert, in dem eine Fehlerabschaltung drohen kann. Abhängig von einem Vergleich der Messgröße mit dem ersten Schwellenwert kann zu dem schnelleren Regelverhalten gewechselt werden.

Eine Anpassung des Regelverhaltens zurück zur langsameren Regelung kann eingeleitet werden, wenn die Messgröße wieder den ersten Schwellenwert erreicht. Vorteilhaft kann jedoch ein hysteretisches Verhalten erzeugt werden, indem ein zweiter Schwellenwert definiert wird. Das normale, langsamere Regelverhalten kann erst dann wieder aktiviert werden, wenn die Messgröße den zweiten Schwellenwert erreicht. Dabei kann der erste Schwellenwert zwischen dem zweiten Schwellenwert und einem Grenzwert liegen, bei dem eine Fehlerabschaltung eingeleitet wird.

Die Messgröße, die zur Anpassung des Regelverhaltens herangezogen wird, kann dieselbe Messgröße sein, anhand der bestimmt wird, ob eine Fehlerabschaltung eingeleitet werden soll.

Eine Anpassung des Regelverhaltens abhängig davon, ob die Messgröße sich in einen Bereich bewegt, in dem eine Fehlerabschaltung wahrscheinlich wird, kann mit einer Änderung des Regelverhaltens basierend auf dem Betriebszustand kombiniert werden. Beispielsweise kann das Regelverhalten des Reglers abhängig davon geändert werden, ob sich das Betriebsgerät in einer Initialisierungsphase oder in einem Nutzbetrieb befindet. Das Regelverhalten des Reglers kann auch abhängig davon geändert werden, ob sich das Betriebsgerät in einer Vorheizphase oder eine Zündphase befindet, wenn das Betriebsgerät ein elektronisches Vorschaltgerät ist. Für wenigstens einen der unterschiedlichen Betriebszustände, in denen eine Regelung der Leistungsfaktorkorrekturschaltung erfolgt, kann das Regelverhalten basierend auf einem Schwellenwertvergleich der in der Leistungsfaktorkorrekturschaltung erfassten Messgröße geändert werden.

Die selektive Änderung des Regelverhaltens abhängig von der Messgröße, die in der Leistungsfaktorkorrekturschaltung erfasst wird, kann durch Änderung wenigstens eines Regelparameters erfolgen, der in den Regelschritten verwendet wird. Abhängig von der Implementierung des Reglers kann es eine unterschiedliche Anzahl von Regelparametern geben, die angepasst werden können.

Für einen Proportional-Integral-Regler (PI-Regler) gibt es beispielsweise zwei Regelparameter, die geändert werden können. Diese können der Verstärkung des PI-Reglers und der Nachstellzeit des PI-Reglers entsprechen. Der oder die Regelparameter kann bzw. können auch die Beiwerte sein, die der Verstärkung des P-Anteils und der Zeitkonstante des I-Anteils des PI-Reglers entsprechen. Andere korrespondierende Größen können gesetzt werden, beispielsweise die so genannten "K"- und "B"-Parameter des PI-Reglers.

Andere Typen von Reglern und entsprechend eine andere Anzahl und/oder Definition von Regelparametern kann verwendet werden. Beispielsweise kann ein Proportional-Integral-Differential-Regler (PID-Regler) verwendet werden. Es können Regler höherer Ordnung verwendet werden.

Die Änderung des Regelverhaltens kann so erfolgen, dass das Zeitintervall, nach dem jeweils ein neuer Regelschritt durchgeführt wird, sich nicht ändert, wenn durch einen Schwellenwertvergleich der Messgröße eine Änderung des Regelverhaltens ausgelöst wird.

Die Änderung des Regelverhaltens, beispielsweise durch Änderung des Regelparameters oder der Regelparameter des Reglers, erfolgt abhängig von einem Schwellenwertvergleich der Messgröße. Dadurch kann ein rasches Regelverhalten selektiv dann erreicht werden, wenn eine Fehlerabschaltung durch rasches Ausregeln der Regelgröße möglicherweise vermieden werden kann. Zusätzlich kann die Änderung des Regelverhaltens, beispielsweise durch Änderung des Regelparameters oder der Regelparameter des Reglers, zeitlich koordiniert mit dem zeitabhängigen Verhalten der Regelgröße und/oder Stellgröße des Reglers erfolgen. Beispielsweise kann die Vornahme von Änderungen des Regelverhaltens zeitlich koordiniert mit einer zeitlichen Änderung einer Ein-Zeit ("Ton-Zeit") eines Leistungsschalters der Leistungsfaktorkorrekturschaltung vorgenommen werden. Die entsprechenden Zeitpunkte, zu denen Änderungen des Regelverhaltens aktiviert werden, können basierend auf dem zeitabhängigen Verhalten der Ausgangsspannung, die auch als Messgröße für den Schwellenwertvergleich zur Detektion einer drohenden Fehlerabschaltung verwendet werden kann, festgelegt werden. Dadurch können gute Übergangseigenschaften bei Aktivierung der Änderungen des Regelverhaltens erreicht werden.

Die Leistungsfaktorkorrekturschaltung kann eine Induktivität und ein mit der Induktivität gekoppeltes steuerbares Schaltmittel aufweist, um durch Schalten des Schaltmittels die Induktivität wahlweise zu laden und zu entladen. Das Schaltmittel kann ein Leistungsschalter, insbesondere ein FET oder MOSFET sein. Die Stellgröße, die von dem Regler beeinflusst wird, kann eine das Schalten des Leistungsschalters definierende Größe sein. Beispielsweise kann die Ein-Zeit ("Ton-Zeit"), für die der Schalter jeweils eingeschaltet wird, als Stellgröße verwendet werden. Es kann eine Aus-Zeit ("Toff-Zeit"), für die der Schalter jeweils ausgeschaltet wird, als Stellgröße verwendet werden. Alternativ oder zusätzlich kann eine Wartezeit, während der der Schalter nach einem Schaltvorgang jeweils mindestens im Aus-Zustand bleibt, als Stellgröße geändert werden. Die Stellgröße kann abhängig vom Betriebsmodus der Leistungsfaktorkorrekturschaltung unterschiedlich sein. Beispielsweise kann in einem CCM ("Continuous Conduction Mode")-Betriebsmodus oder einem BCM ("Borderline Conduction Mode" oder "Boundary Conduction Mode")-Betriebsmodus die Ein-Zeit des Schalters als Stellgröße verwendet werden. In einem DCM ("Discontinuous Conduction Mode")-Betriebsmodus kann die Wartezeit, während der der Schalter nach einem Schaltvorgang jeweils mindestens im Aus-Zustand bleibt, als Stellgröße verwendet werden. Alternativ oder zusätzlich kann jeweils eine Schaltfrequenz als Stellgröße des Reglers verwendet werden.

Eine Leistungsfaktorkorrekturschaltung nach Ausführungsbeispielen umfasst eine Steuereinrichtung, die als Regler für die Leistungsfaktorkorrekturschaltung arbeitet. Die Steuereinrichtung kann in Form einer integrierten Schaltung, insbesondere einer anwendungsspezifischen Spezialschaltung (ASIC, "Application Specific Integrated Circuit"), ausgestaltet sein. Die Steuereinrichtung kann so ausgestaltet sein, dass sie das Regelverfahren nach einem der beschriebenen Ausführungsbeispiele ausführt. Ausgestaltungen der Leistungsfaktorkorrekturschaltung nach Ausführungsbeispielen entsprechen Ausführungsbeispielen des Reglers.

Verfahren und Leistungsfaktorkorrekturschaltungen nach Ausführungsbeispielen können bei einem Betriebsgerät für ein Leuchtmittel, beispielsweise für ein elektronisches Vorschaltgerät für ein Fluoreszenzleuchtmittel oder für einen LED-Konverter, verwendet werden. Bei diesem Anwendungsfall ermöglichen Ausführungsbeispiele der Erfindung, dass das Risiko, dass eine Fehlerabschaltung erforderlich wird, beispielsweise bei einer plötzlichen Änderung von Betriebsbedingungen, wie sie bei abrupter Änderung der Last auftritt, verringert werden kann.

Nach weiteren Ausführungsbeispielen wird ein Betriebsgerät für ein Leuchtmittel angegeben, das die Leistungsfaktorkorrekturschaltung nach einem Ausführungsbeispiel umfasst. Das Betriebsgerät kann ein LED-Konverter sein. Das Betriebsgerät kann ein elektronisches Vorschaltgerät sein.

Die Erfindung wird nachfolgend unter Bezugnahme auf die Zeichnungen anhand bevorzugter Ausführungsformen erläutert.
FIG. 1 zeigt ein Beleuchtungssystem mit einer Leistungsfaktorkorrekturschaltung nach einem Ausführungsbeispiel.
FIG. 2 zeigt ein Schaltbild einer Leistungsfaktorkorrekturschaltung nach einem Ausführungsbeispiel.
FIG. 3 ist ein Zustandsdiagramm zur Erläuterung der Änderung des Regelverhaltens bei Verfahren und Vorrichtungen nach Ausführungsbeispielen.
FIG. 4 illustriert die Änderung des Regelverhaltens bei Verfahren und Vorrichtungen nach Ausführungsbeispielen.
FIG. 5 ist ein Flussdiagramm eines Verfahrens nach einem Ausführungsbeispiel.
FIG. 6 illustriert das Verhalten einer Leistungsfaktorkorrekturschaltung ohne Anpassung des Regelverhaltens.
FIG. 7 illustriert das Verhalten einer Leistungsfaktorkorrekturschaltung mit Änderung des Regelverhaltens bei Verfahren und Vorrichtungen nach Ausführungsbeispielen.
FIG. 8 ist ein Zustandsdiagramm zur Erläuterung der Änderung des Regelverhaltens bei Verfahren und Vorrichtungen nach Ausführungsbeispielen.
FIG. 9 illustriert eine Vornahme von Änderungen des Regelverhaltens bei Verfahren und Vorrichtungen nach Ausführungsbeispielen.

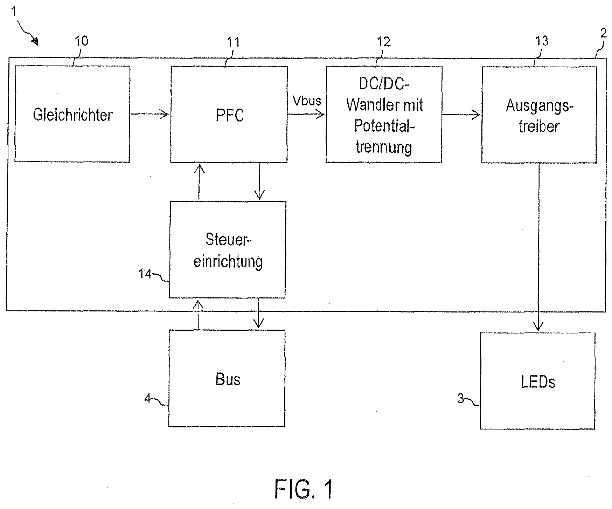

FIG. 1 zeigt eine Blockdiagrammdarstellung eines Beleuchtungssystems 1, das ein Betriebsgerät 2 für ein Leuchtmittel 3, beispielsweise für LEDs umfasst. Das Betriebsgerät 2 kann mit einem Bus 4 oder einem Drahtloskommunikationssystem verbunden sein, um Dimmbefehle zu empfangen und/oder Statusmeldungen auszugeben.

Das Betriebsgerät 2 kann beispielsweise als elektronisches Vorschaltgerät (EVG) für eine Gasentladungslampe, Leuchtstofflampe oder ein anderes Fluoreszenzleuchtmittel oder als LED-Konverter ausgestaltet sein. Das Betriebsgerät 2 weist einen Gleichrichter 10 zum Gleichrichten einer Versorgungsspannung, beispielsweise der Netzspannung auf. Das Betriebsgerät 2 weist eine Schaltung zur Leistungsfaktorkorrektur 11 mit zugeordneter Steuereinrichtung 14 auf. Die Leistungsfaktorkorrekturschaltung 11 stellt eine Ausgangsspannung für nachgeschaltete Komponenten des Betriebsgeräts 2 bereit, die auch als Busspannung Vbus bezeichnet wird. Eine weitere Spannungsumsetzung und/oder Dimmfunktionen können beispielsweise über einen DC/DC-Wandler 12, der als LLC-Resonanzwandler ausgestaltet sein kann, und/oder einen Ausgangstreiber 13 erreicht werden.

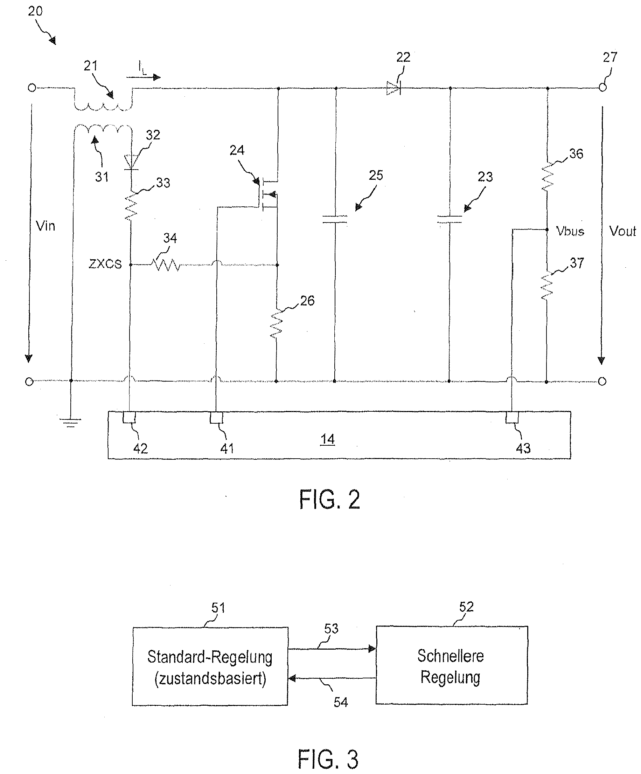

Die Funktionsweise der Leistungsfaktorkorrekturschaltung 11 und ihrer Steuereinrichtung 14 wird unter Bezugnahme auf FIG. 2-9 ausführlicher beschrieben. Allgemein erfüllt die Steuereinrichtung 14 die Funktion eines Reglers für die Leistungsfaktorkorrekturschaltung 11. Es kann insbesondere eine Regelung auf einer Ausgangsspannung der Leistungsfaktorkorrekturschaltung 11 erfolgen. Dabei ist die Steuereinrichtung 14 so ausgestaltet, dass sie abhängig von einem erfassten Wert der Ausgangsspannung der Leistungsfaktorkorrekturschaltung 11 selektiv zwischen einem ersten Regelverhalten und einem zweiten Regelverhalten ändert. Das zweite Regelverhalten kann eine raschere Ausregelung der Ausgangsspannung als das erste Regelverhalten erlauben. Die Änderung des Regelverhaltens kann durch Änderung eines oder mehrerer Regelparameter des Reglers erfolgen. Falls die Steuereinrichtung 14 als PI-Regler arbeitet, kann einer der zwei Regelparameter oder können beide Regelparameter des PI-Reglers geändert werden, um zwischen dem ersten Regelverhalten und dem zweiten Regelverhalten zu wechseln. Die Änderung des oder der Regelparameter kann so sein, dass die Zeit, in der eine Ausregelung erfolgen kann, dadurch beeinflusst wird. Die Änderung kann insbesondere so erfolgen, dass eine schnellere Regelung aktiviert wird, wenn die Ausgangsspannung der Leistungsfaktorkorrekturschaltung 11 einen ersten Schwellenwert erreicht. Eine Rückkehr zu einem langsameren Regelverhalten durch Zurücksetzen des Regelparameters oder der Regelparameter auf die ursprünglichen Werte kann selektiv abhängig von einem zweiten Schwellenwertvergleich erfolgen.

FIG. 2 ist ein Schaltbild der Leistungsfaktorkorrekturschaltung 20 nach einem Ausführungsbeispiel. Eine Versorgungs-Wechselspannung, beispielsweise die Netzspannung, wird von einem (in FIG. 2 nicht dargestellten) Gleichrichter in eine gleichgerichtete Wechselspannung umgesetzt, die als Eingangsspannung Vin zwischen einem Eingangsanschluss der Leistungsfaktorkorrekturschaltung 20 und Masse anliegt. Die Eingangsspannung Vin wird einer Induktivität oder Spule 21 zugeführt. Die Induktivität 21 ist mit einer Diode 22 zwischen den Eingangsanschluss und einen Ausgangsanschluss 27 der Leistungsfaktorkorrekturschaltung 20 in Serie geschaltet. An dem mit einem Ladekondensator 23 gekoppelten Ausgangsanschluss 27 wird eine Ausgangs-Gleichspannung Vout bereitgestellt. Optional kann zwischen die Induktivität 21 und Masse ein weiterer Kondensator 25 geschaltet sein, der parallel zu einer Serienschaltung aus Schalter 24 und Widerstand 26 geschaltet ist. Der Kondensator 25 kann mit demselben Anschluss der Diode 22 verbunden sein, mit dem auch die Induktivität 21 verbunden ist.

Die Ausgangs-Gleichspannung Vout dient zur Versorgung einer Last, der die Leistungsfaktorkorrekturschaltung 20 vorgeschaltet ist. Bei der Last kann es sich beispielsweise um Komponenten eines Betriebsgeräts für ein Leuchtmittel wie beispielsweise eine Leuchtstofflampe, eine Halogen-Lampe, eine Leuchtdiodenanordnung etc. handeln. Die Last kann einen LLC-Resonanzwandler mit Potentialtrennung umfassen. Der LLC-Resonanzwandler kann ebenfalls von der Steuereinrichtung 14 gesteuert werden. Insbesondere kann die Steuereinrichtung 14 auch eine Halbbrückenansteuerung des LLC-Resonanzwandlers vornehmen.

An die Verbindung zwischen der Induktivität 21 und der Diode 22 ist ein steuerbarer elektronischer Schalter 24 angeschlossen, der ein Leistungsschalter ist und der beispielsweise als Feldeffekttransistor (FET), insbesondere als MOSFET, ausgebildet sein kann. Der Schalter 24 kann über einen Shunt-Widerstand 26 mit Masse verbunden sein. Der Schalter 24 wird von der Steuereinrichtung 14 der Leistungsfaktorkorrekturschaltung 20 in den Ein-Zustand und den Aus-Zustand geschaltet. Die Steuereinrichtung 14 weist einen entsprechenden Ausgang 41 zum Aussteuern eines Steuersignals auf, mit dem beispielsweise die Gatespannung des Schalters 24 kontrolliert werden kann.

Im eingeschalteten Zustand des Schalters 24 ist die Induktivität 21 über den Schalter 24 mit Masse verbunden, wobei die Diode 22 sperrt, so dass die Induktivität 21 aufgeladen und Energie in der Induktivität 21 gespeichert wird. Ist hingegen der Schalter 24 ausgeschaltet, d.h. offen, ist die Diode 22 leitend, so dass sich die Induktivität 21 über die Diode 22 in den Ladekondensator 23 entladen kann und die in der Induktivität 21 gespeicherte Energie in den Ladekondensator 23 übertragen wird.

Der Schalter 24 wird von einer Steuereinrichtung 14 angesteuert, die in Form einer integrierten Schaltung, insbesondere als ASIC, ausgestaltet sein kann. Die Leistungsfaktorkorrektur wird durch wiederholtes Ein- und Ausschalten des Schalters 24 erzielt, wobei die Schaltfrequenz für den Schalter 24 viel größer als die Frequenz der gleichgerichteten Eingangs-Wechselspannung Vin ist. Die Leistungsfaktorkorrekturschaltung 20 kann als Boost-Konverter arbeiten. Die Funktionsweise der Steuereinrichtung 14 bei der Regelung der Leistungsfaktorkorrekturschaltung 20 wird unter Bezugnahme auf FIG. 3-9 noch ausführlich beschrieben.

Der Steuereinrichtung 14 können verschiedene Messgrößen zugeführt werden, die zur Steuerung oder Regelung der Leistungsfaktorkorrekturschaltung 20 oder anderer Komponenten des Betriebsgeräts ausgewertet werden können. Für die nachfolgend ausführlicher beschriebene Regelung der Ausgangsspannung Vout kann die Steuereinrichtung 14 über einen Spannungsteiler mit Widerständen 36, 37 die Ausgangsspannung erfassen, wobei die erfasste Spannung Vbus über das Teilerverhältnis der Widerstände 36 / 37 der Ausgangsspannung Vout entspricht. Die entsprechende Messgröße, die die Ausgangsspannung anzeigt, wird der Steuereinrichtung 14 an einem Eingang 43 als analoges oder digitales Signal zugeführt. Die entsprechende Messgröße, die die Ausgangsspannung anzeigt, dient auch dazu, selektiv das Regelverhalten anzupassen, um das Risiko zu verringern, dass eine Ausgangsspannung auftritt, die eine Fehlerabschaltung erfordert.

Der Steuereinrichtung 14 können auch weitere Messgrößen zugeführt werden, beispielsweise eine Messgröße am Eingang 42, die anzeigt, wann ein Strom I_{L} in der Induktivität 21 einen Nulldurchgang aufweist bzw. mit welchem Vorzeichen der Nulldurchgang erfolgt. Die entsprechende Erfassungsschaltung kann eine Windung 31 oder kleine Spule 31, die induktiv mit der Induktivität 21 gekoppelt ist, aufweisen. Die Windung 31 ist über eine Diode 32 und einen Widerstand 33 mit einem Knoten verbunden, der über einen weiteren Widerstand 34 mit einem Knoten zwischen dem Schalter 24 und dem Widerstand 26 verbunden ist. Das Signal am Eingang 42 der Steuereinrichtung 14 zeigt Nulldurchgänge des Stroms I_{L} in der Induktivität 21 insbesondere in den Zeitperioden, in denen der Schalter 24 in den Aus-Zustand geschaltet ist, an.

Die Steuereinrichtung 14 erzeugt ein Steuersignal, um den Schalter 24 in den Ein-Zustand bzw. den Aus-Zustand zu schalten. Dies kann auf unterschiedliche Weise und insbesondere in unterschiedlichen Betriebsmodi geschehen. Wenn ein BCM-Betrieb oder CCM-Betrieb aktiviert ist, kann die Zeitdauer, während der der Schalter 24 jeweils eingeschaltet wird, als Stellgröße der Regelschleife eingestellt werden, um die Ausgangsspannung auf einen Sollwert zu regeln. Wenn ein DCM-Betrieb aktiviert ist, wird nach dem Schalten des Schalters 24 in den Aus-Zustand nicht unmittelbar der Schalter 24 wieder eingeschaltet, wenn der Strom I_{L} in der Induktivität 21 auf Null abgefallen ist, sondern es ist eine bestimmte Wartezeit vorgesehen. Diese Wartezeit und/oder die Ein-Zeit des Schalters kann im DCM-Betrieb als Stellgröße verwendet werden.

Die Steuereinrichtung 14 kann weitere Funktionen ausführen. Falls beispielsweise die Ausgangsspannung einen zulässigen Wertebereich verlässt, in dem ein sicherer Dauerbetrieb möglich ist, kann die Steuereinrichtung 14 automatisch eine Fehlerabschaltung einleiten. Während der Betrieb der Leistungsfaktorkorrekturschaltung 20 gestoppt ist, kann ein Schalten des Schalters 24 unterbleiben.

Um das Risiko zu verringern, dass die Ausgangsspannung den zulässigen Wertebereich verlässt und eine Fehlerabschaltung erforderlich wird, kann die Steuereinrichtung 14 abhängig von der über den Eingang 43 und Spannungsteiler 36, 37 erfassten Ausgangsspannung selektiv das Regelverhalten anpasse. Dazu kann die Steuereinrichtung 14 automatisch zwischen einem ersten Betriebsmodus, in dem sie ein langsameres Regelverhalten zeigt, und einem zweiten Betriebsmodus, in dem sie ein schnelleres Regelverhalten zeigt, wechseln.

FIG. 3 illustriert die verschiedenen Betriebsmodi des Reglers, der durch die Steuereinrichtung 14 realisiert wird. In einem ersten Betriebsmodus 51 weist die Steuereinrichtung 14 ein erstes Regelverhalten zum Regeln der Ausgangsspannung der Leistungsfaktorkorrekturschaltung auf. In einem zweiten Betriebsmodus 52 weist die Steuereinrichtung 14 ein zweites Regelverhalten zum Regeln der Ausgangsspannung der Leistungsfaktorkorrekturschaltung auf. Das zweite Regelverhalten ist so, dass die Ausgangsspannung wieder rascher auf einen Sollwert zurückgeregelt werden kann.

Ein Übergang 53 von dem ersten Betriebsmodus 51 in den zweiten Betriebsmodus 52 kann erfolgen, wenn die Ausgangsspannung Werte erreicht, die in einem ersten Intervall unter dem Grenzwert liegen, bei dem eine automatische Fehlerabschaltung erfolgen würde. D.h., der Übergang 53 erfolgt dann, wenn das Risiko besteht, dass die Ausgangsspannung bei Fortsetzung des ersten Regelverhaltens bis auf den Grenzwert ansteigt, bei dem eine automatische Fehlerabschaltung erfolgen würde.

Ein Übergang 54 von dem zweiten Betriebsmodus 52 zurück in den ersten Betriebsmodus 51 kann erfolgen, wenn die Ausgangsspannung wieder so weit von dem Grenzwert, bei dem eine automatische Fehlerabschaltung erfolgen würde, entfernt ist, dass nur ein geringes Risiko besteht, dass die Ausgangsspannung in kürzerer Zeit wieder bis auf den Grenzwert ansteigt.

Schwellenwertvergleiche können vorgenommen werden, um den Übergang 53 und den Übergang 54 zwischen den unterschiedlichen Regelverhalten auszulösen. Der Übergang zwischen den unterschiedlichen Regelverhalten kann erfolgen, indem wenigstens einer der Regelparameter, die zur Ermittlung des Stellschritts bzw. der neuen Stellgröße bei einem Regelschritt verwendet werden, geändert wird. Falls die Steuereinrichtung 14 als PI-Regler arbeitet, kann beispielsweise die Verstärkung des PI-Reglers erhöht und/oder die Nachstellzeit des PI-Reglers verringert werden, um den Übergang 53 von dem normalen Regelverhalten zu dem schnelleren Regelverhalten in zustand 52 durchzuführen.

So lange sich die Steuereinrichtung im Betriebsmodus 51 befindet, können die Regelparameter abhängig davon sein, wie das Verhalten in Bezug auf die Harmonischen des Netzstromes ist. So lange sich die Steuereinrichtung im Betriebsmodus 52 befindet, können die Regelparameter für diesen Zustand unabhängig davon sein, wie das Verhalten in Bezug auf die Harmonischen des Netzstromes ist..

Wie in FIG. 3 schematisch angedeutet, kann die Regelung im ersten Betriebsmodus 51 davon abhängen, in welchem Betriebszustand sich das Betriebsgerät mit der Leistungsfaktorkorrekturschaltung befindet. Beispielsweise können die Regelparameter des Reglers im Betriebsmodus 51, z.B. die Verstärkung eines PI-Reglers und/oder eine Nachstellzeit des PI-Reglers, davon abhängen, ob sich das Betriebsgerät in einer Initialisierungsphase oder in einem Dauerbetrieb befindet. Falls das Betriebsgerät ein elektronisches Vorschaltgerät ist, können die Regelparameter des Reglers im Betriebsmodus 51, davon abhängen, ob sich das Betriebsgerät in einer Initialisierungsphase, einer Vorheizphase, einer Zündphase oder einem Dauerbetrieb befindet. Für wenigstens einen der Betriebszustände kann ein Übergang zu einem Regelverhalten, bei dem eine schnellere Regelung erfolgt, möglich sein. Insbesondere kann ein derartiger Übergang zu einem Regelverhalten, bei dem eine schnellere Regelung erfolgt, wenigstens im Dauerbetriebszustand des Betriebsgeräts möglich sein.

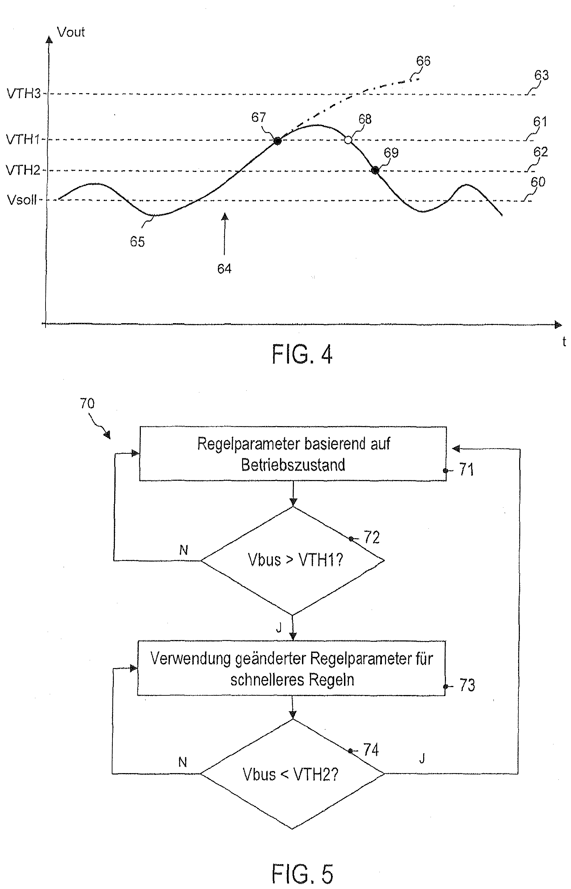

FIG. 4 illustriert die Wirkungsweise der Änderung des Regelverhaltens abhängig von der Ausgangsspannung.

Die Steuereinrichtung 14 wirkt als Regler, der die Ausgangsspannung der Leistungsfaktorkorrekturschaltung beispielsweise auf einen Sollwert 60 regelt. Ein beispielhafter Spannungsverlauf 65 ist dargestellt.

Bei einer abrupten Änderung von Betriebsbedingungen bei einer Zeit 64, beispielsweise bei einer Verringerung der Last, kann ein entsprechender Anstieg der Ausgangsspannung 65 resultieren. Die Ausgangsspannung 65 kann sich einem Grenzwert 63 nähern, bei dem eine Fehlerabschaltung eingeleitet werden würde.

Um das Risiko zu verringern, dass die Ausgangsspannung 65 bis zu dem Grenzwert 63 ansteigt, vergleicht die Steuereinrichtung 14 die Ausgangsspannung 65 mit einem ersten Schwellenwert 61. Durch einen entsprechenden Schwellenwertvergleich wird erkannt, wenn die Ausgangsspannung 65 bei 67 den ersten Schwellenwert 61 erreicht. Dies veranlasst die Steuereinrichtung 14, ein anderes Regelverhalten zu aktivieren. Dazu können Regelparameters des Reglers geändert werden. Das neue Regelverhalten wird so eingestellt, dass eine raschere Regelung der Ausgangsspannung 65 vom Punkt 67 zurück zum Sollwert 60 erreicht wird. Entsprechend können bei dem schnelleren Regelverhalten Regelparameter gewählt werden, die für eine vorgegeben Abweichung der Ausgangsspannung von dem Sollwert 60 zu größeren Stellschritten der Stellgröße führen als die bisherigen Regelparameter. Als Stellgröße kann wie erwähnt beispielsweise eine Ein-Zeit, eine Aus-Zeit, eine Wartezeit und/oder eine Schaltfrequenz beim Schalten des Leistungsschalters 24 verwendet werden.

Durch das bei 67 aktivierte Regelverhalten kann bei dem dargestellten Spannungsverlauf 65 eine Regelung zurück in Richtung des Sollwerts 60 ausreichend rasch erfolgen, so dass der Grenzwert 63 nicht erreicht wird. Eine Fehlerabschaltung der Leistungsfaktorkorrekturschaltung kann vermieden werden.

Eine Rückkehr zum standardmäßigen, langsameren Regelverhalten kann beispielsweise erfolgen, wenn die Ausgangsspannung 65 wieder den ersten Schwellenwert 61 erreicht. Vorteilhaft kann jedoch ein zweiter Schwellenwert 62 so definiert werden, dass der erste Schwellenwert 61 zwischen dem zweiten Schwellenwert 62 und dem Grenzwert 63 liegt. Dadurch wird ein hysteretisches Verhalten erreicht. Die Rückkehr zum normalen, langsameren Regelverhalten würde in diesem Fall nicht schon bei 68 erfolgen, sondern erst, wenn die Ausgangsspannung 65 bei 69 den zweiten Schwellenwert 62 erreicht.

Falls das Regelverhalten bei Erreichen des ersten Schwellenwerts 61 nicht angepasst wird, besteht ein größeres Risiko, dass die Ausgangsspannung so weit ansteigt, dass eine Fehlerabschaltung der Leistungsfaktorkorrekturschaltung erforderlich wird. Ein entsprechender Spannungsverlauf 66 ist zum Vergleich ebenfalls dargestellt. Bei Erreichen des Grenzwerts 63 würde die automatische Fehlerabschaltung erfolgen. Dies könnte beispielsweise ein erneutes Durchlaufen einer Initialisierungsphase des Betriebsgeräts erforderlich machen.

FIG. 5 ist ein Flussdiagramm eines Verfahrens 70 nach einem Ausführungsbeispiel. Das Verfahren kann von der Steuereinrichtung 14 automatisch ausgeführt werden. Dabei erfolgt ein Übergang zwischen einem ersten Regelverhalten und einem zweiten Regelverhalten abhängig von einem Vergleich der Ausgangsspannung mit einem ersten Schwellenwert VTH1 und mit einem zweiten Schwellenwert VTH2.

Bei 71 wird eine Regelung unter Verwendung von Regelparametern durchgeführt. Es kann wenigstens ein Regelschritt unter Verwendung der Regelparameter durchgeführt werden. Die Regelparameter können Regelparameter eines PI-Reglers sein. Die Werte der Regelparameter können abhängig von einem Betriebszustand eines Betriebsgeräts sein, in dem die Leistungsfaktorkorrekturschaltung verwendet wird. Beispielsweise können die Anfangswerte für die Regelparameter, die der normalen, langsameren Regelung entsprechen, davon abhängen, ob sich das Betriebsgerät in einem Dauerbetriebszustand oder in einem vom Dauerbetriebszustand verschiedenen Betriebszustand befindet.

Bei 72 wird überprüft, ob die Ausgangsspannung der Leistungsfaktorkorrekturschaltung größer als der erste Schwellenwert ist. Falls dies nicht der Fall ist, kehrt das Verfahren zu 71 zurück. Es kann erneut ein Regelschritt unter Verwendung der bei 71 genutzten Regelparameter durchgeführt werden. Alternativ kann die Überwachung bei 72 mehrfach wiederholt werden, bevor erneut ein Regelschritt bei 71 durchgeführt wird.

Falls bei 72 erkannt wird, dass die Ausgangsspannung der Leistungsfaktorkorrekturschaltung größer als der erste Schwellenwert ist, fährt das Verfahren bei 73 fort. Bei 73 wird ein Regelschritt mit geänderten Regelparametern durchgeführt, wobei wenigstens ein Regelparameter im Vergleich zu den bei 71 verwendeten Werten einen anderen Wert aufweist.

Bei 74 wird überprüft, ob die Ausgangsspannung der Leistungsfaktorkorrekturschaltung kleiner als der zweite Schwellenwert VTH2 ist. Der zweite Schwellenwert VTH2 kann kleiner als der erste Schwellenwert VTH1 sein. Falls die Ausgangsspannung der Leistungsfaktorkorrekturschaltung nicht kleiner als der zweite Schwellenwert VTH2 ist, kehrt das Verfahren zu 73 zurück. Es kann erneut ein Regelschritt unter Verwendung der geänderten Regelparameter durchgeführt werden. Dabei ist der Wert wenigstens eines Regelparameters im Vergleich zu dem bei 71 verwendeten Wert so verändert, dass für eine Vorgegebene Abweichung zwischen Regelgröße und Sollwert ein größerer Stellschritt für das Stellglied ermittelt wird als bei einer Regelung unter Verwendung der Parameterwerte, die bei 71 verwendet werden. Alternativ kann die Überwachung bei 74 mehrfach wiederholt werden, bevor erneut ein Regelschritt bei 73 durchgeführt wird.

Falls bei 74 erkannt wird, dass die Ausgangsspannung der Leistungsfaktorkorrekturschaltung kleiner als der zweite Schwellenwert ist, kehrt das Verfahren zu 71 zurück. Es erfolgt eine Rückkehr zum normalen Regelverhalten, bei dem kein besonders schnelles Ausregeln großer Abweichungen vom Sollwert erforderlich ist.

Das Verfahren 70 kann weitere Schritte umfassen. Beispielsweise kann ein Betriebszustand des Betriebsgeräts, in dem die Leistungsfaktorkorrekturschaltung verwendet wird, überwacht werden. Das Regelverhalten kann unabhängig von der Ausgangsspannung der Leistungsfaktorkorrekturschaltung auch dann geändert werden, wenn eine Änderung des Betriebszustands erkannt wird. Als Antwort auf den Übergang in den neuen Betriebszustand kann die Steuereinrichtung 14 automatisch den Wert wenigstens eines Regelparameters zustandsabhängig ändern. Entsprechende Werte für Regelparameter in Abhängigkeit vom Betriebszustand kann die Steuereinrichtung 14 kennfeldbasiert ermitteln, beispielsweise durch eine Tabellenabfrage. Auch im neuen Betriebszustand kann dann wieder ein Übergang zu einem schnelleren Regelverhalten abhängig von dem Kriterium bei 71 erfolgen. Der erste Schwellenwert VTH1 und/oder der zweite Schwellenwert VTH2 können betriebszustandsabhängig gewählt sein.

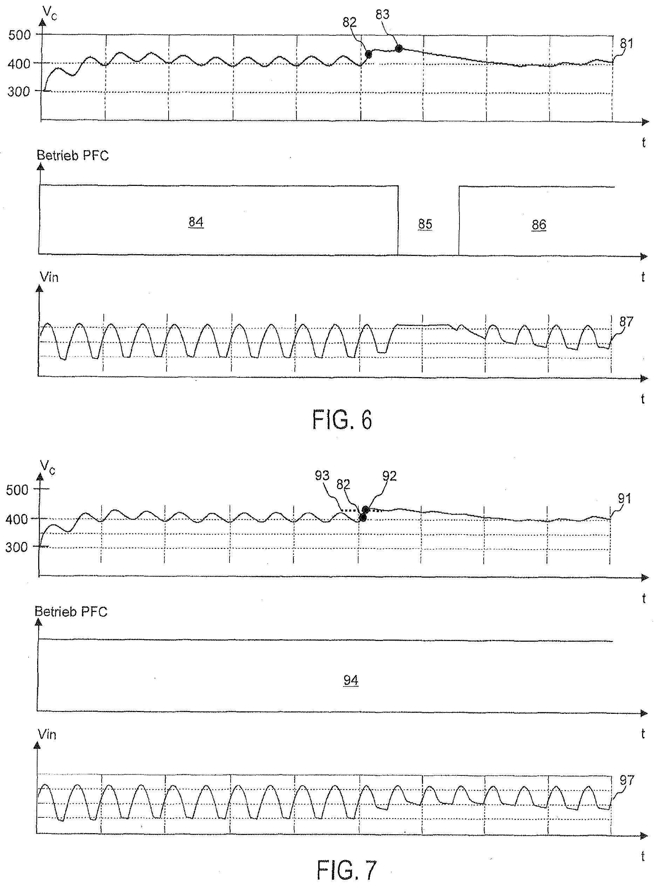

FIG. 6 illustriert das Verhalten einer Leistungsfaktorkorrekturschaltung, bei der keine Änderung des Regelverhaltens erfolgt und eine Fehlerabschaltung bei einer Ausgangsspannung von 450 V vorgenommen wird. Dargestellt sind die Spannung 81 am Ladekondensator 23 der Leistungsfaktorkorrekturschaltung (oberer Teil der Figur), eine Fehlerabschaltung der Leistungsfaktorkorrekturschaltung (mittlerer Teil der Figur) und eine entsprechende gleichgerichtete Wechselspannung, die der Eingangsspannung 87 entspricht (unterer Teil der Figur).

Wenn sich bei 82 die Last abrupt ändert, führt dies zu einem Anstieg der Ausgangsspannung 81. Die Steuereinrichtung erkennt, wenn bei 83 die Ausgangsspannung der Leistungsfaktorkorrekturschaltung einen Grenzwert erreicht, bei dem eine Fehlerabschaltung erfolgt.

Entsprechend schaltet nach einem Zustand 84, in dem die Leistungsfaktorkorrekturschaltung in Betrieb ist, die Steuereinrichtung die Leistungsfaktorkorrekturschaltung aus (Zustand 85). Erst nach einem bestimmten Intervall kann ein sicherer Betrieb im Zustand 86 fortgesetzt werden, wobei der Schalter 24 der Leistungsfaktorkorrekturschaltung wieder entsprechend geschaltet wird.

Durch eine Anpassung des Regelverhaltens abhängig von einem Schwellenwertvergleich der Ausgangsspannung mit einem ersten Schwellenwert, der kleiner als der Grenzwert, bei dem die Fehlerabschaltung erfolgt, gewählt ist, kann das Risiko verringert werden, dass eine Fehlerabschaltung erfolgt, wenn sich beispielsweise die Last abrupt ändert. Während eine Fehlerabschaltung nicht immer verhindert werden kann, wird zumindest die Wahrscheinlichkeit verringert, dass die Ausgangsspannung bis auf den Grenzwert ansteigt, bei dem die Fehlerabschaltung automatisch vorgenommen wird.

FIG. 7 illustriert das Verhalten der Leistungsfaktorkorrekturschaltung, wenn abhängig von der Ausgangsspannung und insbesondere abhängig von einem Vergleich mit einem ersten Schwellenwert 93 Regelparameter geändert werden, um das Regelverhalten zu ändern. Dargestellt ist die Spannung 91 am Ladekondensator 23 der Leistungsfaktorkorrekturschaltung (oberer Teil der Figur), ein Betrieb der Leistungsfaktorkorrekturschaltung (mittlerer Teil der Figur) und eine entsprechende gleichgerichtete Wechselspannung, die der Eingangsspannung 97 entspricht (unterer Teil der Figur).

Wenn sich die Last bei 82 abrupt ändert, führt dies zu einem Anstieg der Ausgangsspannung 91. Die Steuereinrichtung erkennt, wenn bei 92 die Ausgangsspannung der Leistungsfaktorkorrekturschaltung den ersten Schwellenwert 92 erreicht. Dieser ist so gewählt, dass noch keine Fehlerabschaltung erfolgen muss. Bei oder nach Erreichen des ersten Schwellenwerts 92 kann die Steuereinrichtung 14 automatisch einen Regelparameter ändern, um ein rascheres Ausregeln des Anstiegs der Ausgangsspannung 91 zu ermöglichen. Entsprechend steigt die Ausgangsspannung 91 nicht bis auf den Grenzwert an, bei dem die Fehlerabschaltung erfolgen würde. Die Leistungsfaktorkorrekturschaltung kann einen Betrieb 94 aufweisen, der nicht durch eine Fehlerabschaltung unterbrochen wird.

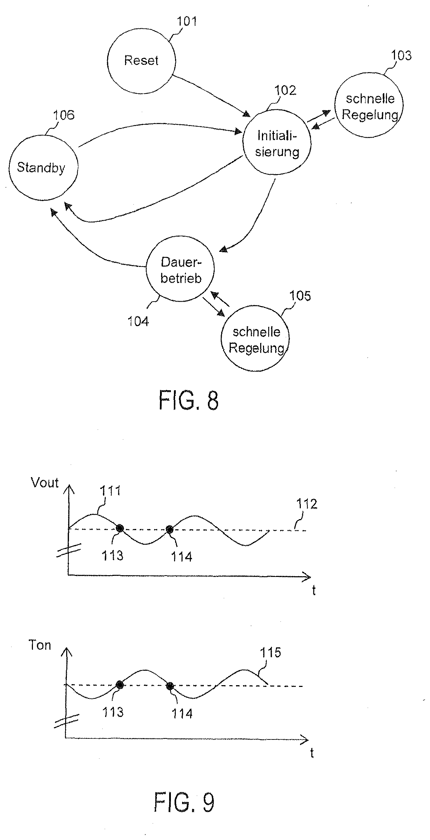

Wie unter Bezugnahme auf FIG. 3 und FIG. 5 bereits erläutert wurde, kann das Betriebsgerät 2, in dem die Leistungsfaktorkorrekturschaltung verwendet wird, verschiedene Betriebszustände aufweisen. Die Steuereinrichtung 14 kann das Betriebsgerät 2 entsprechend den Betriebszuständen steuern oder regeln. Insbesondere kann eine Regelung der Ausgangsspannung zustandsabhängig realisiert sein. Dies wird unter Bezugnahme auf FIG. 8 weiter erläutert.

FIG. 8 zeigt verschiedene Betriebszustände eines Betriebsgeräts für ein Leuchtmittel. Die Betriebszustände können beispielsweise die Zustände "Reset" 101, "Initialisierung" 102, "Dauerbetrieb" 104 und "Standby" 106 umfassen. Die Leistungsfaktorkorrekturschaltung 20 ist im Zustand "Initialisierung" 102 und im Zustand "Dauerbetrieb" 104 eingeschaltet. Die Leistungsfaktorkorrekturschaltung 20 kann im Zustand "Standby" 102 und "Reset" 101 ausgeschaltet sein.

Bei einem normalen Betrieb des Betriebsgeräts wird ausgehend von einem "Reset" 101 oder "Standby" 106 der Zustand "Initialisierung" 102 eingeleitet. Tritt im Zustand "Initialisierung" 102 ein Fehler auf, erfolgt ein Übergang zum Zustand "Standby" 106. Ein Fehler kann auftreten, wenn die Ausgangsspannung der Leistungsfaktorkorrekturschaltung einen Grenzwert übersteigt, bei dem eine Fehlerabschaltung automatisch vorgenommen wird. Tritt kein Fehler bei der "Initialisierung" 102 auf, erfolgt ein Übergang zum Zustand "Dauerbetrieb" 104. Tritt im Zustand "Dauerbetrieb" 104 ein Fehler auf, erfolgt ein Übergang zum Zustand "Standby" 106. Ein Fehler kann auftreten, wenn die Ausgangsspannung der Leistungsfaktorkorrekturschaltung einen Grenzwert übersteigt, bei dem eine Fehlerabschaltung automatisch vorgenommen wird.

Die Regelung der Ausgangsspannung der Leistungsfaktorkorrekturschaltung im Zustand "Initialisierung" 102 und im Zustand "Dauerbetrieb" 104 kann unterschiedlich sein. Insbesondere kann wenigstens ein Regelparameter verschiedene Werte aufweisen, wenn eine Regelung im Zustand "Initialisierung" 102 bzw. im Zustand "Dauerbetrieb" 104 erfolgt.

Für wenigstens einen oder beide der Zustände "Initialisierung" 102 und "Dauerbetrieb" 104 ist ein zugeordneter Betriebsmodus 103 bzw. 105 vorgesehen, bei dem sich das Regelverhalten des Reglers im Vergleich zum zugehörigen Betriebszustand 102, 104 ändert. Im Zustand "Initialisierung" 102 kann, wie unter Bezugnahme auf FIG. 1-7 beschrieben, die Ausgangsspannung der Leistungsfaktorkorrekturschaltung überwacht und abhängig von einem Schwellenwertvergleich ein Übergang zum zugehörigen Betriebsmodus 103 mit rascherem Regelverhalten eingeleitet werden. Ähnlich kann im Zustand "Dauerbetrieb" 104, wie unter Bezugnahme auf FIG. 1-7 beschrieben, die Ausgangsspannung der Leistungsfaktorkorrekturschaltung überwacht und abhängig von einem Schwellenwertvergleich ein Übergang zum zugehörigen Betriebsmodus 105 mit rascherem Regelverhalten eingeleitet werden. Der Schwellenwert ist dabei jeweils so gewählt, dass die Ausgangsspannung der Leistungsfaktorkorrekturschaltung noch nicht den Grenzwert erreicht hat, bei dem eine Fehlerabschaltung erfolgen muss.

Wenn für mehrere der Betriebszustände des Betriebsgeräts die Leistungsfaktorkorrekturschaltung einen zugehörigen Betriebsmodus 103 bzw. 105 mit geändertem Regelverhalten aufweist, kann das Regelverhalten in den Betriebsmodi 103 und 105, die unterschiedlichen Betriebszuständen 102, 104 zugeordnet sind, unterschiedlich sein. Der Wert wenigstens eines Regelparameters kann in den Zuständen 103 und 105 unterschiedlich gesetzt sein. Dadurch können unterschiedliche Anforderungen an das Ausregeln von erhöhten Ausgangsspannungen zur Vermeidung einer Sicherheitsabschaltung abhängig von dem zugeordneten Betriebszustand 102 bzw. 104 berücksichtigt werden. Alternativ kann das Regelverhalten in den Betriebsmodi 103 und 105 gleich sein. Die Werte aller Regelparameter können in den Zuständen 103 und 105 gleich gesetzt sein.

Ein Übergang zu einem Betriebsmodus mit geändertem Regelverhalten abhängig von der Ausgangsspannung wird abhängig von einem Schwellenwertvergleich der Ausgangsspannung eingeleitet. Allerdings werden zur Bestimmung des Zeitpunkts, bei dem Änderungen des Regelverhaltens aktiviert werden, auch weitere Größen der Leistungsfaktorkorrekturschaltung 20 berücksichtigt. Beispielsweise kann der Übergang zu einem neuen Regelverhalten, d.h. der Zeitpunkt, an dem Änderungen der Regelparameter aktiviert werden, weiterhin abhängig von dem zeitabhängigen Verhalten der Stellgröße, die bei der Regelung gestellt wird, und/oder abhängig von Spannungsrippeln der Ausgangsspannung festgelegt werden.

Alternativ oder zusätzlich kann zur Erfassung der Ausgangsspannung auch die Änderung des Tastverhältnisses und / oder der Einschaltzeit des Schalters 24 ausgewertet werden.

FIG. 9 illustriert Spannungsrippel 111 der Ausgangsspannung und eine entsprechende Änderung der Stellgröße 115, die beispielsweise der Ein-Zeit des Schalter 24 entsprechen kann.

Der Zeitpunkt, an dem ein Zustand mit rascherem Regelverhalten aktiviert wird, kann abhängig davon festgelegt werden, dass die Ausgangsspannung einen ersten Schwellenwert erreicht oder überstiegen hat und dass zusätzlich die Aktivierung bei einer bestimmte Phasenlage der zeitabhängigen Änderung der Stellgröße 115 und/oder der Spannungsrippel 111 erfolgt. Beispielsweise kann eine Änderung von Regelparametern selektiv bei Zeiten 113 oder 114 aktiviert werden, an denen die Ausgangsspannung einen Nominalwert 112 erreicht. Zusätzlich kann dabei gefordert sein, dass die Ausgangsspannung den ersten Schwellenwert erreicht oder übersteigt.

Während Ausführungsbeispiele unter Bezugnahme auf die Figuren beschrieben wurden, können Abwandlungen bei weiteren Ausführungsbeispielen realisiert werden. Beispielsweise kann die Steuereinrichtung der Leistungsfaktorkorrekturschaltung nicht nur als PI-Regler ausgestaltet sein. Andere Regler, beispielsweise Regler höherer Ordnung, können verwendet werden.

Während Ausführungsbeispiele beschrieben wurden, bei denen eine Änderung des Regelverhaltens derart realisiert wurde, dass eine Geschwindigkeit der Regelung angepasst wird, kann die Änderung von Regelparametern auch zu anderen Zwecken erfolgen, beispielsweise um das Risiko von Kriechverhalten der Regelgröße zum Sollwert und/oder Überschwingen der Regelgröße zu verringern.

Verfahren und Vorrichtungen nach Ausführungsbeispielen können bei Betriebsgeräten für Leuchtmittel, beispielsweise bei einem elektronischen Vorschaltgerät oder bei einem LED-Konverter, verwendet werden.

## Patentansprüche

1. Verfahren zum Regeln einer Leistungsfaktorkorrekturschaltung (11; 20) für ein Leuchtmittel (3), wobei Regelschritte in Abhängigkeit von Regelparametern durchgeführt werden, und wobei das Verfahren umfasst:
Erfassen einer Messgröße (65; 91) in der Leistungsfaktorkorrekturschaltung (11; 20),
Ändern wenigstens eines Regelparameters abhängig von der erfassten Messgröße (65; 91) und
Verwenden des geänderten wenigstens einen Regelparameters in wenigstens einem Regelschritt,
wobei der wenigstens eine Regelparameter abhängig von einem Schwellenwertvergleich der erfassten Messgröße (65; 91) geändert wird,
wobei ein Zeitpunkt, zu dem eine Änderung des wenigstens einen Regelparameters aktiviert wird, abhängig von wenigstens einer von der Messgröße (65; 91) verschiedenen weiteren Größe der Leistungsfaktorkorrekturschaltung (11; 20) bestimmt wird,
wobei das Ändern abhängig von dem Schwellenwertvergleich der erfassten Messgröße (65; 91) mit einem ersten Schwellenwert (61; 92) durchgeführt wird, und
wobei abhängig davon, ob die erfasste Messgröße (65; 91) einen vorgegebenen Wertebereich verlässt, ein Betrieb der Leistungsfaktorkorrekturschaltung (11; 20) wenigstens vorübergehend gestoppt wird,
**dadurch gekennzeichnet,**
**dass** der erste Schwellenwert (61; 92) in dem vorgegebenen Wertebereich liegt und von einem Grenzwert (63) des vorgegebenen Wertebereichs beabstandet ist.

2. Verfahren nach Anspruch 1,
wobei bei den Regelschritten ein neuer Stellwert für eine Stellgröße (115) jeweils abhängig von dem wenigstens einen Regelparameter ermittelt wird.

3. Verfahren nach Anspruch 2,
wobei der wenigstens eine Regelparameter so angepasst wird, dass eine Geschwindigkeit, mit der eine Regelgröße auf einen Sollwert geregelt wird, durch die Änderung des Regelparameters beeinflusst wird.

4. Verfahren nach einem der vorhergehenden Ansprüche, weiterhin umfassend:
Auswählen eines Anfangswerts für jeden Regelparameter in Abhängigkeit von einem Betriebszustand,
wobei bei dem Ändern der wenigstens eine Regelparameter auf einen von dem entsprechenden Anfangswert verschiedenen Wert gesetzt wird.

5. Verfahren nach Anspruch 4,
wobei der Wert, auf den der Regelparameter bei dem Ändern gesetzt wird, von dem Betriebszustand abhängt.

6. Verfahren nach einem der Ansprüche 1 - 5,
wobei das Erfassen der Messgröße (65; 91) nach dem Ändern fortgesetzt wird, und wobei abhängig von einem Vergleich der Messgröße (65; 91) mit einem zweiten Schwellenwert (62) der wenigstens eine Regelparameter auf einen Wert, den der entsprechende Regelparameter vor dem Ändern hatte, zurückgesetzt wird.

7. Verfahren nach Anspruch 6,
wobei der erste Schwellenwert (61; 92) zwischen dem zweite Schwellenwert (62) und einem Grenzwert (63), bei dem der Betrieb der Leistungsfaktorkorrekturschaltung (11; 20) wenigstens vorübergehend gestoppt wird, liegt.

8. Verfahren nach einem der vorhergehenden Ansprüche, wobei die Leistungsfaktorkorrekturschaltung (11; 20) eine Induktivität (21) und ein mit der Induktivität (21) gekoppeltes steuerbares Schaltmittel (24) aufweist, um durch Schalten des Schaltmittels (24) die Induktivität (21) wahlweise zu laden und zu entladen,
wobei in wenigstens einem Regelschritt eine Stellgröße (115) gestellt wird, die das Schalten des Schaltmittels (24) beeinflusst.

9. Verfahren nach Anspruch 8,
wobei eine Aktivierung der Änderung des wenigstens einen Regelparameters zeitlich koordiniert mit einer zeitlichen, insbesondere periodischen, Änderung der Stellgröße (115) durchgeführt wird.

10. Verfahren nach einem der vorhergehenden Ansprüche,
wobei die Messgröße (65; 91) eine Ausgangsspannung (65; 91) der Leistungsfaktorkorrekturschaltung (11; 20) repräsentiert, und
wobei die Regelschritte durchgeführt werden, um die Ausgangsspannung (65; 91) auf einen Sollwert zu regeln.

11. Leistungsfaktorkorrekturschaltung (11; 20) für ein Leuchtmittel (3), umfassend
eine Steuereinrichtung (14), die eingerichtet ist, um zum Regeln der Leistungsfaktorkorrekturschaltung (11; 20) Regelschritte in Abhängigkeit von Regelparametern durchzuführen, wobei die Steuereinrichtung (14) eingerichtet ist, um
eine in der Leistungsfaktorkorrekturschaltung (11; 20) auftretende Messgröße (65; 91) zu erfassen,
wenigstens einen Regelparameter abhängig von der erfassten Messgröße (65; 91) zu ändern und
den geänderten wenigstens einen Regelparameter in wenigstens einem Regelschritt zu verwenden,
wobei die Leistungsfaktorkorrekturschaltung (11; 20) eingerichtet ist, um
den wenigstens einen Regelparameter abhängig von einem Schwellenwertvergleich der erfassten Messgröße (65; 91) zu ändern,
einen Zeitpunkt, zu dem eine Änderung des wenigstens einen Regelparameters aktiviert wird, abhängig von wenigstens einer von der Messgröße (65; 91) verschiedenen weiteren Größe der Leistungsfaktorkorrekturschaltung (11; 20) zu bestimmen,
das Ändern abhängig von dem Schwellenwertvergleich der erfassten Messgröße (65; 91) mit einem ersten Schwellenwert (61; 92) durchzuführen, und
abhängig davon, ob die erfasste Messgröße (65; 91) einen vorgegebenen
Wertebereich verlässt, einen Betrieb der Leistungsfaktorkorrekturschaltung (11; 20) wenigstens vorübergehend zu stoppen,
**dadurch gekennzeichnet,**
**dass** der erste Schwellenwert (61; 92) in dem vorgegebenen Wertebereich liegt und von einem Grenzwert (63) des vorgegebenen Wertebereichs beabstandet ist.

12. Leistungsfaktorkorrekturschaltung (11; 20) nach Anspruch 11,
die zur Durchführung des Verfahrens nach einem der Ansprüche 1-10 eingerichtet ist.

13. Betriebsgerät für ein Leuchtmittel (3), umfassend
die Leistungsfaktorkorrekturschaltung (11; 20) nach Anspruch 11 oder Anspruch 12.

## Claims

1. A method for controlling a power factor correction circuit (11; 20) for a luminous means (3), wherein control steps are carried out depending on control parameters, and wherein the method comprises:
Detection of a measurement variable (65; 91) in the power factor correction circuit (11; 20),
variation of at least one control parameter depending on the detected measurement variable (65; 91) and
use of the varied at least one control parameter in at least one control step,
wherein the at least one control parameter is varied depending on a threshold value comparison of the detected measurement variable (65; 91),
wherein a point in time, at which a variation of the at least one control parameter is activated, is determined depending on at least one further variable of the power factor correction circuit (11; 20) different from the measurement variable (65; 91),
wherein the variation is carried out depending on the threshold value comparison of the detected measurement variable (65; 91) with a first threshold value (61; 92), and
wherein depending on whether the detected variable (65; 91) leaves a predetermined value range, an operation of the power factor correction circuit (11; 20) is at least temporarily stopped,
**characterized in**
**that** the first threshold value (61; 92) is in the predetermined value range and is spaced apart from a limit value (63) of the predetermined value range.

2. A method according to Claim 1,
wherein in the control steps a new adjustment value for a correcting variable (115) is determined in each case depending on the at least one control parameter.

3. A method according to Claim 2,
wherein the at least one control parameter is adjusted so that a speed, with which a control variable is controlled to a target value, is influenced by the variation of the control parameter.

4. A method according to any one of the preceding claims, furthermore comprising:
Selection of a starting value for each control parameter in dependence on an operating state,
wherein in the variation the at least one control parameter is set to a value different from the corresponding start value.

5. A method according to Claim 4,
wherein the value, to which the control parameter is set in the variation, depends on the operating state.

6. A method according to any one of Claims 1 - 5,
wherein the detection of the measurement variable (65; 91) is continued after the variation, and wherein depending on a comparison of the measurement variable (65; 91) with a second threshold value (62) the at least one control parameter is reset to a value, which the corresponding control parameter had before the variation.

7. A method according to Claim 6,
wherein the first threshold value (61; 92) is between the second threshold value (62) and a limit value (63), at which the operation of the power factor correction circuit (11; 20) is stopped at least temporarily.

8. A method according to any one of the preceding claims, wherein the power factor correction circuit (11; 20) has an inductor (21) and a controllable switch means (24) coupled with the inductor (21), in order to selectively load and to unload the inductor (21) by switching the switch means (24),
wherein in at least one control step the correcting variable (115) is set, which influences the switching of the switch means (24).

9. A method according to Claim 8,
wherein an activation of the variation of the at least one control parameter is carried out coordinated in time with a time, in particular, periodic, variation of the correcting variable (115).

10. A method according to any one of the preceding claims,
wherein the measurement variable (65; 91) represents an output voltage (65, 91) of the power factor correction circuit (11; 20), and
wherein the control steps are carried out, in order to control the output voltage (65; 91) to a target value.

11. A power factor correction circuit (11; 20) for a luminous means (3), comprising
a control device (14), which is configured, in order to carry out control steps for controlling the power factor correction circuit (11; 20) depending on control parameters, wherein the control device (14) is configured, in order
to detect a measurement variable (65; 91) occurring in the power factor correction circuit (11; 20),
to vary at least one control parameter depending on the detected measurement variable (65; 91) and
to use the varied at least one control parameter in at least one control step,
wherein the power factor correction circuit (11; 20) is configured, in order to vary the at least one control parameter depending on a threshold value comparison of the detected measurement variable (65; 91),
to determine a point in time, at which a variation of the at least one control parameter is activated, depending on at least one further variable of the power factor correction circuit (11; 20) different from the measurement variable (65; 91),
to carry out the variation depending on the threshold value comparison of the detected measurement variable (65; 91) with a first threshold value (61; 92) and depending on whether the detected measurement variable (65; 91) leaves the predetermined value range, to stop an operation of the power factor correction circuit (11; 20) at least temporarily,
**characterized in**
**that** the first threshold value (61; 92) is in the predetermined value range and is spaced apart from a limit value (63) of the predetermined value range.

12. A power factor correction circuit (11; 20) according to Claim 11,
which is configured for carrying out the method according to any one Claims 1 - 10.

13. An operating device for a luminous means (3), comprising the power factor correction circuit (11; 20) according to Claim 11 or Claim 12.

## Revendications

1. Procédé de régulation d'un circuit de correction de facteur de puissance (11 ; 20) pour un moyen d'éclairage (3), des étapes de régulation étant exécutées en fonction de paramètres de régulation, le procédé comprenant :
la mesure d'une grandeur de mesure (65 ; 91) dans le circuit de correction de facteur de puissance (11 ; 20),
la modification d'au moins un paramètre de régulation en fonction de la grandeur de mesure (65 ; 91) mesurée et
l'utilisation de l'au moins un paramètre de régulation modifié dans au moins une étape de régulation,
l'au moins un paramètre de régulation étant modifié en fonction d'une comparaison avec une valeur seuil de la grandeur de mesure (65 ; 91) mesurée,
un moment, auquel une modification de l'au moins un paramètre de régulation est activé, étant déterminé en fonction d'au moins une autre grandeur du circuit de correction de facteur de puissance (11 ; 20) différente de la grandeur de mesure (65 ; 91),
la modification étant effectuée en fonction de la comparaison avec une valeur seuil de la grandeur de mesure (65 ; 91) mesurée avec une première valeur seuil (61 ; 92) et
en fonction du fait que la grandeur de mesure (65 ; 91) quitte ou non une plage de valeurs prédéterminée, un fonctionnement du circuit de correction de facteur de puissance (11 ; 20) étant au moins provisoirement arrêté,
**caractérisé en ce que**
la première valeur seuil (61 ; 92) se trouve dans le plage de valeurs prédéterminée et est écartée d'une valeur limite (63) de la plage de valeurs prédéterminée.

2. Procédé selon la revendication 1,
moyennant quoi, dans les étapes de régulation, une nouvelle valeur de réglage pour une grandeur de réglage (115) est déterminée en fonction de l'au moins un paramètre de régulation.

3. Procédé selon la revendication 2,
l'au moins un paramètre de régulation étant ajusté de façon à ce qu'une vitesse avec laquelle une grandeur de régulation est réglée à une valeur de consigne, est influencée par la modification du paramètre de régulation.

4. Procédé selon l'une des revendications précédentes, comprenant en outre :
la sélection d'une valeur initiale pour chaque paramètre de régulation en fonction d'un état de fonctionnement,
moyennant quoi, lors de la modification, l'au moins un paramètre de régulation est réglé à une valeur différente de la valeur initiale correspondante.

5. Procédé selon la revendication 4,
la valeur à laquelle le paramètre de régulation est réglé lors de la modification dépendant de l'état de fonctionnement.

6. Procédé selon l'une des revendications 1 à 5,
la mesure de la grandeur de mesure (65; 91) étant continuée après la modification et, en fonction d'une comparaison de la grandeur de mesure (65 ; 91) avec une deuxième valeur seuil (62), l'au moins un paramètre de régulation étant réinitialisé à une valeur que le paramètre de régulation correspondant avait avant la modification.

7. Procédé selon la revendication 6,
la première valeur seuil (61 ; 92) se trouvant entre la deuxième valeur seuil (62) et une valeur limite (63) à laquelle le fonctionnement du circuit de correction de facteur de puissance (11 ; 20) est au moins provisoirement arrêté.

8. Procédé selon l'une des revendications précédentes, le circuit de correction de facteur de puissance (11 ; 20) comprenant une inductance (21) et un moyen de commutation (24) contrôlable couplé avec l'inductance (21), afin de charger et de décharger de manière sélective l'inductance (21) par la commutation du moyen de commutation (24),
dans au moins une étape de régulation, une grandeur de réglage (115) étant réglée, qui influence la commutation du moyen de commutation (24).

9. Procédé selon la revendication 8,
une activation de la modification de l'au moins un paramètre de régulation étant effectuée de manière coordonnée dans le temps avec une modification temporelle, plus particulièrement périodique, de la grandeur de réglage (115).

10. Procédé selon l'une des revendications précédentes,
la grandeur de mesure (65 ; 91) représentant une tension de sortie (65 ; 91) du circuit de correction de facteur de puissance (11 ; 20) et
les étapes de régulation étant exécutées afin de réguler la tension de sortie (65 ; 91) à une valeur de consigne.

11. Circuit de correction de facteur de puissance (11 ; 20) pour un moyen d'éclairage (3), comprenant
un dispositif de commande (14) qui est conçu pour exécuter, pour la régulation du circuit de correction de facteur de puissance (11 ; 20), des étapes de régulation en fonction de paramètres de régulation, le dispositif de commande (14) étant conçu pour
mesurer une grandeur de mesure (65 ; 91) apparaissant dans le circuit de correction de facteur de puissance (11 ; 20),
modifier au moins un paramètre de régulation en fonction de la grandeur de mesure (65 ; 91) mesurée et
utiliser au moins un paramètre de régulation dans au moins une étape de régulation,
le circuit de correction de facteur de puissance (11 ; 20) étant conçu pour modifier l'au moins un paramètre de régulation en fonction d'une comparaison avec une valeur seuil de la grandeur de mesure (65 ; 91) mesurée,
déterminer un moment auquel une modification de l'au moins un paramètre de régulation est activée, en fonction d'au moins une autre grandeur, différente de la grandeur de mesure (65 ; 91), du circuit de correction de facteur de puissance (11 ; 20),
effectuer la modification en fonction de la comparaison de la grandeur de mesure (65 ; 91) mesurée avec une première valeur seuil (61 ; 92) et
en fonction du fait que la grandeur de mesure (65 ; 91) quitte ou non une plage de valeurs prédéterminée, un fonctionnement du circuit de correction de facteur de puissance (11 ; 20) est au moins provisoirement arrêté,
**caractérisé en ce que**
la première valeur seuil (61 ; 92) se trouve dans la plage de valeurs prédéterminée et est écartée d'une valeur limite (63) de la plage de valeurs prédéterminée.

12. Circuit de correction de facteur de puissance (11 ; 20) selon la revendication 11, qui est conçu pour l'exécution du procédé selon l'une des revendications 1 à 10.

13. Appareil de commande pour un moyen d'éclairage (3) comprenant
le circuit de correction de facteur de puissance (11 ; 20) selon la revendication 11 ou la revendication 12.
